# FASCICULE DE BREVET EUROPEEN

(11) **EP 1 558 458 B1**
(45) Date de publication et mention de la délivrance du brevet: **03.01.2007**
(21) Numéro de dépôt: 03782535.3
(22) Date de dépôt: 07.11.2003
(51) Int. Cl.: B60L 5/40

(54) **DISPOSITIF DE CONTROLE PERMANENT DE LA MISE A LA TERRE POUR UN VEHICULE DE TRANSPORT EN COMMUN ELECTRIQUE SUR PNEUS ET AUTOGUIDE**
VORRICHTUNG ZUR PERMANENTEN KONTROLLE VON DER ERDUNG EINES ELEKTRISCHEN ÖFFENTLICHEN SELBSTSTEUERNDEN TRANSPORTFAHRZEUGES AUF REIFEN
PERMANENT CONTROL DEVICE FOR THE GROUNDING OF AN ELECTRIC PUBLIC TRANSPORT VEHICLE RUNNING ON TYRES AND WHICH IS SELF-GUIDED

(30) Priorité: 08.11.2002 FR 0214062
(43) Date de publication de la demande: 03.08.2005
(73) Titulaire: LOHR INDUSTRIE S.A., F-67980 Hangenbieten (FR)
(72) Inventeur: LOHR, Robert, F-67980 Hangenbieten (FR); VERDIER, Laurent, F-67000 Strasbourg (FR)
(74) Mandataire: Metz, Paul
(86) Numéro de dépôt international: PCT/FR2003/003337
(87) Numéro de publication internationale: WO 2004/043727

(56) Documents cités:
- AT-B- 409 248
- US-A- 5 960 717

## Description

La présente invention se rapporte à un dispositif de sécurité contre l'électrisation des personnes dans un véhicule de transport en commun autoguidé et sur pneumatiques utilisant l'énergie électrique comme énergie de traction.

Ce dispositif de sécurité vise à éviter qu'une partie métallique touchée par une personne extérieure au véhicule ou en transit se trouve portée à un potentiel électrique dangereux.

Le danger d'électrisation des personnes dans les transports en commun fait l'objet de plusieurs réglementations et normes.

De plus, les constructeurs de véhicules de transport en commun utilisant l'énergie électrique ont prévu des dispositifs de sécurité visant à amoindrir le risque et procèdent à de nombreux essais et contrôles d'isolation électrique à différents niveaux et sur différents ensembles avec lesquels les personnes sont susceptibles d'entrer en contact.

Plusieurs mesures peuvent être mises en oeuvre pour amoindrir le risque d'électrisation des personnes. On peut prévoir d'utiliser des pièces d'habillage isolantes, par exemple en polyester ou en fibre de verre époxy, qui recouvrent toutes les parties métalliques du véhicule. Le plancher du véhicule peut être recouvert d'un revêtement isolant. On prévoit classiquement aussi d'isoler électriquement au montage, par rapport à la structure métallique du véhicule, les équipements et accessoires métalliques tels que portes, barres de maintien, marchepieds et autres. Toutes ces mesures de sécurité ne permettent pas toutefois d'éliminer le danger d'électrisation des personnes et ne peuvent tout au plus qu'en restreindre le taux d'occurrence.

Dans le brevet US-5 960 717, on a également proposé d'empêcher l'accès au rail d'alimentation électrique en le recouvrant d'un ou plusieurs éléments linéaires de protection. Un mécanisme d'ouverture porté par le support relevable de guidage, soulève localement ces éléments de protection pour permettre le passage et le déplacement des pièces de contact pour le captage du courant d'alimentation. Ce mécanisme assure ensuite automatiquement, après le passage des pièces de contact, le retour en position de fermeture des éléments de protection.

On connaît également, par le brevet AT 409 248 B, un dispositif de protection pour les collecteurs de courant équipant les véhicules souterrains de transport en commun, qui captent généralement l'électricité au niveau de la face inférieure de rails conducteurs d'alimentation et qui restent conducteurs même s'ils ne sont pas en contact avec le rail d'alimentation. Pour éviter les accidents, un dispositif de blocage de courant est affecté à chaque collecteur. Ce dispositif bloque les flux de courant non souhaités partant du système électrique du véhicule et allant vers le collecteur, mais laisse passer le courrant allant du rail d'alimentation vers le système électrique du véhicule via le collecteur.

L'un des objectifs de la présente invention est d'éliminer le danger par la mise à la terre du châssis du véhicule par l'intermédiaire de patins dédiés glissant sur ou frottant contre le rail de guidage lui-même relié à la terre. Ce contact permanent avec le rail de guidage empêche toute élévation du potentiel du châssis du véhicule. Toutefois un danger peut subsister dans deux cas : si le rail est lui-même isolé ou en cas de décollement des patins. Il faut par conséquent s'assurer en permanence, à l'aide de moyens spécifiques, de la mise à la masse correcte du châssis.

Le but général de l'invention est de contrôler en permanence la qualité de la mise à la terre du châssis afin d'éviter tout risque d'électrisation des personnes qui toucheraient des parties ou pièces métalliques pouvant présenter un potentiel électrique et de déclencher quasi instantanément la coupure de l'alimentation électrique en cas de danger et plus généralement d'actionner tous les dispositifs de sécurité adéquats prévus sur le véhicule : par exemple la coupure du disjoncteur principal, la commande en abaissement du pantographe et/ou la mise en oeuvre du frein de sécurité.

Afin de contrôler la mise à la terre du châssis, l'invention prévoit d'équiper l'un au moins des dispositifs de guidage du véhicule de deux patins destinés à assurer un contact de frottement avec le rail de guidage, lui-même relié à la terre, et d'alimenter l'un de ces patins à l'aide d'un courant de basse tension disponible sur le véhicule. De façon préférentielle les deux patins sont disposés de part et d'autre des galets de guidage, l'un à l'avant de l'ensemble de guidage et l'autre à l'arrière. Un dispositif de contrôle électrique permet de vérifier si les patins sont collés ou décollés du rail et si la mise à la terre du châssis est correcte. Un composant électrique du circuit ou un circuit logique additionnel commande, en cas de danger, la mise en oeuvre des systèmes de sécurité du véhicule.

Dans un mode de réalisation préféré de l'invention, on prévoit d'équiper de tels patins, deux au moins, des ensembles de guidage du véhicule. Dans ce cas on préférera la variante de réalisation selon laquelle on relie entre eux les patins respectifs reliés à la masse qui seront ainsi au même potentiel, et l'on isole entre eux les patins alimentés par la basse tension embarquée sur le véhicule.

A cet effet le dispositif de sécurité selon la présente invention pour la prévention du risque d'électrisation des personnes dans les véhicules de transport en commun sur pneus autoguidés par un rail métallique de guidage à l'aide d'au moins un ensemble d'autoguidage gouvernant un ensemble roulant directionnel mettant en oeuvre au moins un galet roulant sur le rail métallique de guidage et utilisant l'énergie électrique comme énergie de traction se caractérise en ce qu'au moins un ensemble d'autoguidage avant ou arrière de la rame comporte au moins deux éléments de contact électrique distants l'un de l'autre en contact avec le rail métallique de guidage et en ce que ces éléments de contact forment avec la partie du rail de guidage s'étendant entre eux et un moyen de détection du passage d'un courant une boucle de sécurité alimentée par un générateur de basse tension électrique, le moyen de détection fournissant un signal ou un état de boucle fermée ou de boucle ouverte selon que le contact électrique au niveau des éléments de contact est bon et satisfaisant ou mauvais et insatisfaisant provoquant dans ce dernier cas l'entrée en action de dispositifs de sécurité ou la mise en application de mesures de sécurité.

Le dispositif selon la présente invention apporte divers avantages particuliers tout à fait intéressants.
- peu coûteux, simple et fiable
- tous les modes de défaillance du contrôleur conduisent à une ouverture de la boucle de sécurité
- la disponibilité du véhicule n'est pas affectée
- dans le cas de plusieurs véhicules, il n'existe aucune interaction électrique entre les véhicules ou rames.

D'autres caractéristiques et avantages de l'invention apparaîtront dans la description qui suit, donnée à titre d'exemple et accompagnée des dessins dans lesquels :
- la figure 1 est une vue schématique d'ensemble en perspective d'un ensemble de guidage sur lequel est monté le dispositif de contrôle pour la sécurité selon l'invention,
- la figure 2 est une vue de détail en perpective de la partie encerclée de la figure 1 correspondant au bras de guidage en prise sur le rail de guidage avec un des patins de contact électrique,
- la figure 3 est un schéma montrant une rame vue de profil et l'emplacement des patins de contact électrique sur le rail de guidage,
- la figure 4 est le schéma électrique simplifié d'une première variante du dispositif selon l'invention dans laquelle la borne BT- du générateur basse tension est reliée au châssis,
- la figure 5 est le schéma électrique simplifié d'une deuxième variante du dispositif selon l'invention dans laquelle la borne BT+ du générateur basse tension est reliée au châssis,
- la figure 6 est un diagramme logique montrant les cas de risque potentiel et l'état subséquent de la boucle de sécurité dans le cas de la première variante,
- la figure 7 est un diagramme logique montrant les cas de risque potentiel et l'état subséquent de la boucle de sécurité dans le cas de la deuxième variante,

La présente invention s'applique principalement aux véhicules de transport en commun par exemple une rame autoguidée 1 utilisant l'énergie électrique comme énergie de traction et un ensemble d'autoguidage sur un rail métallique 2 par l'intermédiaire d'un ou de plusieurs galet(s) 3 et 4 roulant sur ce rail métallique de guidage, le véhicule ou rame se déplaçant sur des roues avant 5, arrière 6, et intermédiaires 7 et 8 équipées de pneumatiques.

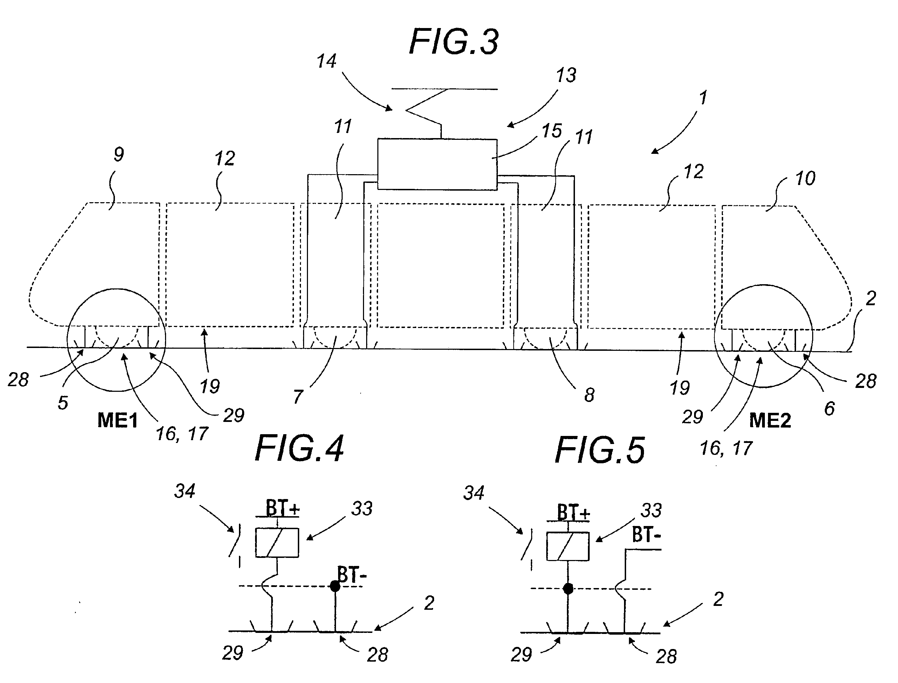

Il s'agit de rames autoguidées 1 de transport en commun de personnes dont un exemple est représenté de profil sur la figure 3.

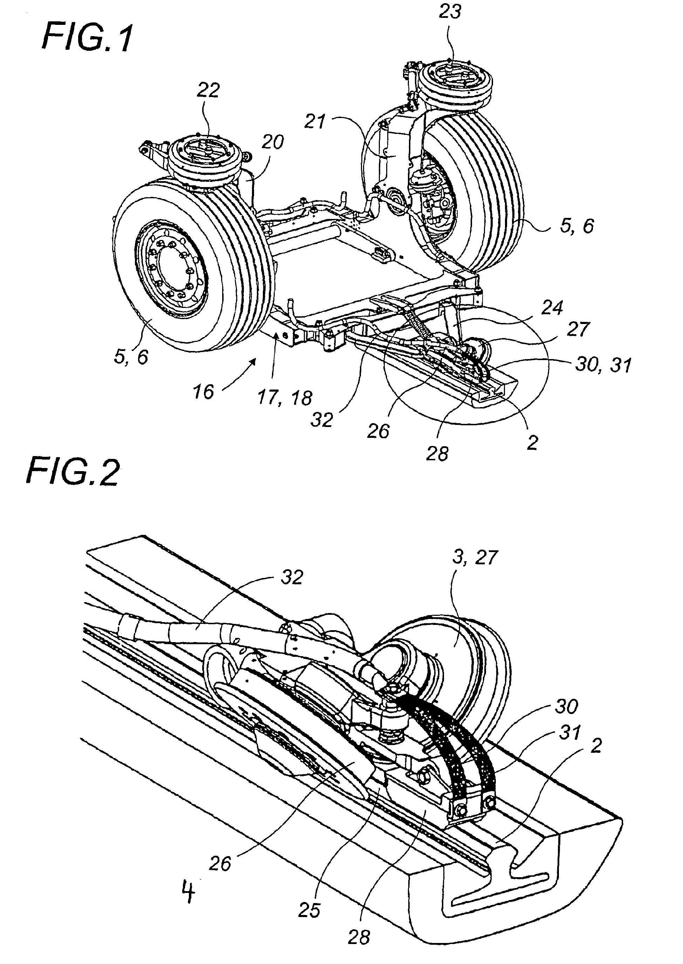

Ces rames 1 sont formées de modules articulés entre eux avant 9, arrière 10 intermédiaires portés 11 et intermédiaires porteurs 12. Un ensemble d'alimentation électrique 13 à haute tension en énergie de traction à pantographe 14 arrive aux moteurs par un coffret d'alimentation 15 comportant sa propre mise à la terre. Ces rames 1 comportent à l'avant et à l'arrière et dans le cas de plus grande longueur également en partie médiane de part et d'autre à chaque fois l'équivalent d'un essieu directeur gouverné par au moins un ensemble d'autoguidage tel que 16 monté sur un châssis directeur 17 dont un exemple de réalisation est représenté plus en détail sur les figures 1 et 2.

Le châssis directeur 17 se compose des éléments principaux suivants.

Un cadre-châssis 18 est monté pivotant sur le châssis 19 du véhicule, en particulier de la rame 1. Il comporte deux montants 20 et 21 sur lesquels sont montés les arbres de roues 5 ou 6 équipées chacune d'un pneumatique. Ces montants se prolongent vers le haut pour former des supports pour des suspensions 22 et 23 par exemple à soufflets et des amortisseurs.

L'ensemble est guidé le long du rail métallique de guidage 2 par exemple du type de celui représenté sur les figures. Ce rail de guidage 2 est encastré dans ou sur le sol et relié électriquement à la terre. Il peut présenter le profil de celui représenté sur les figures.

Chacun des ensembles d'autoguidage 16 tel que celui représenté, se compose par exemple d'au moins un bras relevable 24 par exemple par pivotement autour d'un axe de pivotement horizontal dont le support d'extrémité est formé d'une platine 25 sur laquelle sont montés à rotation deux galets inclinés 26 et 27 disposés et maintenus en V à pointe dirigée vers le bas. Ces galets par exemple du type à mentonnet roulent le long du rail de guidage 2 sur ses faces inclinées et assurent la référence directionnelle au véhicule de transport en commun.

Selon l'invention sont prévus, montés sur l'avant ou l'arrière du châssis de la rame, deux éléments de contact avec le rail de guidage.

Ces éléments de contact avec le rail de guidage peuvent être des patins d'appui et de contact électrique par glissement ou frottement 28 et 29 utilisés selon l'invention par paire et distants l'un de l'autre pour délimiter entre eux une portion de rail de guidage.

Ces patins peuvent être placés comme le montre les figures 1 et 2 pour l'un, à l'avant du support d'extrémité portant les galets inclinés 26 et 27 et pour l'autre (non représenté), de l'autre côté des galets dans l'axe du rail de guidage ou sur un autre ensemble de guidage.

Le corps de chaque patin est monté pivotant ou autrement articulé sur un support ou suspendu élastiquement ou articulé au châssis de la rame et selon le cas correctement isolé électriquement par rapport à ce support.

Chaque patin comporte par exemple une sous face conformée selon le profil inverse du rail pour assurer un contact étroit et complet de glissement ou de frottement. Il s'agit pour l'exemple représenté sur les figures, d'une section à profil en auge.

Selon une première variante, un des patins 28 est relié électriquement directement à la masse du châssis ou à une borne négative BT- d'un générateur électrique comme on le verra ci-après alors que l'autre patin 29 de la paire est relié à la borne positive BT+ du même générateur à travers un moyen de détection par une liaison électrique de section conductrice importante.

La liaison électrique du patin 28 se présente par exemple comme pour la version représentée sur les figures, sous la forme de deux bandes tressées 30 et 31 dont les extrémités avant sont individualisées et fixées par écrous sur la partie frontale du corps du patin et dont les extrémités arrière sont réunies à celles d'un câble électrique 32 à gaine isolante dont l'autre extrémité se trouve reliée à la borne négative du générateur électrique BT- elle même reliée à la masse du châssis.

Toujours selon la première variante, l'autre patin 29 (non représenté sur les figures 1 et 2) est relié électriquement à travers un moyen de détection comme décrit ci-après à la borne positive BT+ d'un générateur électrique de basse tension dont la borne négative BT- est reliée électriquement au châssis métallique du véhicule.

Selon les figures 1 et 2, et la description ci-dessus, les deux patins 28 et 29 d'une même paire sont disposés de part et d'autre des galets de guidage selon l'axe du rail de guidage. Selon une autre variante, montrée schématiquement sur la figure 3, les deux patins d'une même paire peuvent se situer de part et d'autre de la ligne d'essieu à l'avant et à l'arrière selon l'axe du rail de guidage. Ils forment alors deux groupes référencés dans cette description ME1 à l'avant (encerclé sur la partie gauche de la planche de dessin) et ME2 à l'arrière (encerclé sur la partie droite de cette même planche de dessin).

Pour connaître en permanence l'état et la qualité du contact électrique avec le rail métallique de guidage c'est-à-dire la continuité électrique avec le rail métallique de guidage et donc la qualité de la mise électrique à la terre, le montage suivant a été imaginé.

Ce montage regroupe deux patins 28 et 29 de part et d'autre des galets de guidage ou deux patins de part et d'autre des lignes d'essieu (paires ME1 et ME2) et ceci quel que soit leur support mécanique ou la façon dont ils sont supportés c'est-à-dire leur liaison mécanique avec le bras ou le châssis qui peut se faire par des éléments annexes de support des articulations multidirectionnelles avec des suspensions élastiques appropriées, doublées éventuellement de précontraintes ou tout autre moyen.

Les deux patins 28 et 29 d'un même ensemble de guidage ou d'un même ensemble directionnel ME1 ou ME2 sont montés dans un circuit électrique de basse tension de préférence continue, par exemple 24 volts entre les bornes référencées BT+ et BT- d'un même générateur électrique comme représenté sur la figure 4 formant un circuit de sécurité. Dans ce circuit de sécurité, se trouvent montés en série entre les bornes BT+ et BT- du générateur sous la forme d'une boucle dite de sécurité, un détecteur par exemple de courant ou de passage du courant ou un dispositif électromagnétique par exemple un relais comportant une bobine électromagnétique 33 actionnant au moins les contacts d'un interrupteur 34, un premier patin 29, le rail de guidage 2 métallique et conducteur, et un deuxième patin 28 de la même paire ME1 ou ME2 relié électriquement à la borne BT-, elle même reliée à la masse du châssis.

Un montage analogue existe pour l'ensemble directionnel à l'arrière de la rame.

Les deux montages peuvent être indépendants ou groupés en parallèle ou groupés par la simple réunion des bornes négatives entre elles.

Notre exemple se limite à deux ensembles directionnels. Dans le cas d'une rame de plus grande longueur un ou deux ensembles directionnels intermédiaires peuvent être prévus comportant chacun un montage de détection tel que décrit ci-dessus.

En ce qui concerne le détecteur de courant ou de passage de courant, il peut s'agir de tout détecteur approprié fournissant un signal exploitable dans le cas du passage d'un courant dont l'intensité peut être située au-delà d'un seuil correspondant à une valeur minimale en deça de laquelle elle n'a pas de signification précise ou comporte une incertitude trop grande quant à la qualité du contact électrique qu'elle doit représenter.

Le fonctionnement individuel de chaque circuit de détection est le suivant.

Si le contact électrique au niveau de chacun des deux patins 28 et 29 présente une qualité suffisante, le courant passe dans la boucle de détection et la bobine du relais est alimentée et au-delà d'un certain seuil de courant elle déclenchera la fermeture des contacts de l'interrupteur 34 relatifs à la bobine 33 et les maintiendra fermés aussi longtemps que la valeur du courant dépassera le seuil de déclenchement. Le principe est le même dans le cas d'un détecteur notamment de courant remplaçant le dispositif électromagnétique à bobine. Si la qualité des contacts électriques se dégrade ou s'il survient un événement de limitation de passage du courant ou pour une cause quelconque, le contact se coupe ou devient faible, médiocre ou erratique, la bobine 33 ne sera plus ou sera insuffisamment alimentée et l'interrupteur 34 s'ouvrira.

Les deux ensembles avant ME1 et arrière ME2 fonctionnent de la même façon.

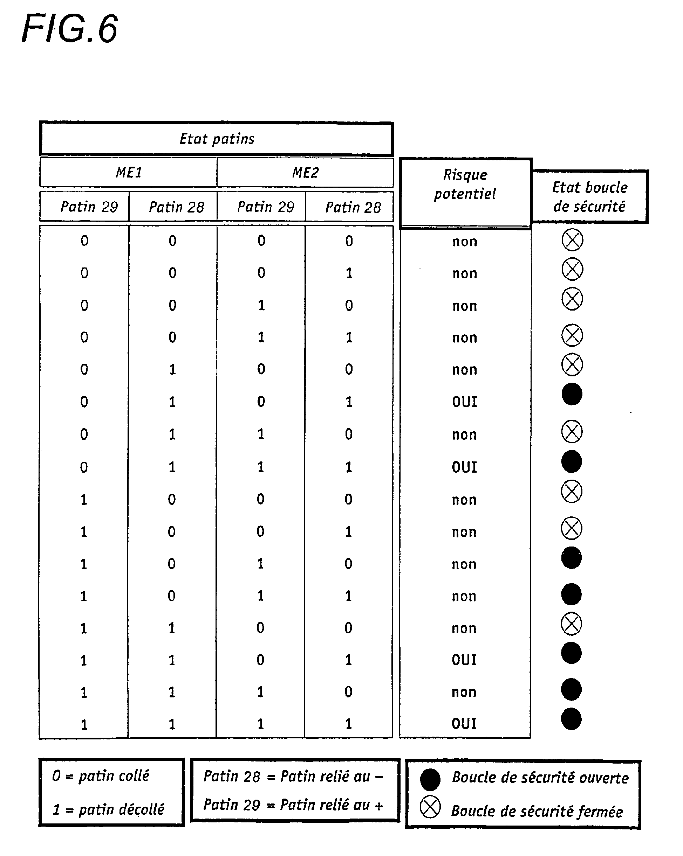

On a consigné sur le tableau de la figure 6 tous les états possibles dans un système à deux ensembles ME1 et ME2 avec les conclusions sur le risque potentiel et sur l'état de la boucle de sécurité représentant la grille d'une logique de commande qui aboutira à la suppression du risque par exemple par la coupure de l'alimentation électrique générale, par l'abaissement du pantographe ou par la fermeture du disjoncteur principal ou par mise en oeuvre du frein de sécurité dans le cas d'un risque important identifié.

Le défaut de mise à la terre du rail de guidage 2 peut également être détecté car il déclenche le détecteur.

Tous les cas d'état de boucle de sécurité ouverte correspondant à un cercle noir sur la figure 6 sont repris ci-dessous dont quatre cas considérés comme potentiellement dangereux.
1. ME1 patin 29 collé et ME1 patin 28 décollé avec ME2 patin 29 collé et ME2 patin 28 décollé,
2. ME1 patin 29 collé et ME1 patin 28 décollé avec ME2 patin 29 décollé et ME2 patin 28 décollé,
3. ME1 patin 29 décollé et ME1 patin 28 collé avec ME2 patin 29 décollé et ME2 patin 28 collé,
4. ME1 patin 29 décollé et ME1 patin 28 collé avec ME2 patin 29 décollé et ME2 patin 28 décollé,
5. ME1 patin 29 décollé et ME1 patin 28 décollé avec ME2 patin 29 collé et ME2 patin 28 décollé,
6. ME1 patin 29 décollé et ME1 patin 28 décollé avec ME2 patin 29 décollé et ME2 patin 28 collé,
7. ME1 patin 29 décollé et ME1 patin 28 décollé avec ME2 patin 29 décollé et ME2 patin 28 décollé.

Ces indications permettent d'après le tableau de la figure 6 d'établir un avertissement de danger potentiel d'électrisation conduisant à des mesures immédiates de précaution pouvant aller jusqu'à la coupure de l'alimentation électrique du véhicule de transport, en particulier de la rame.

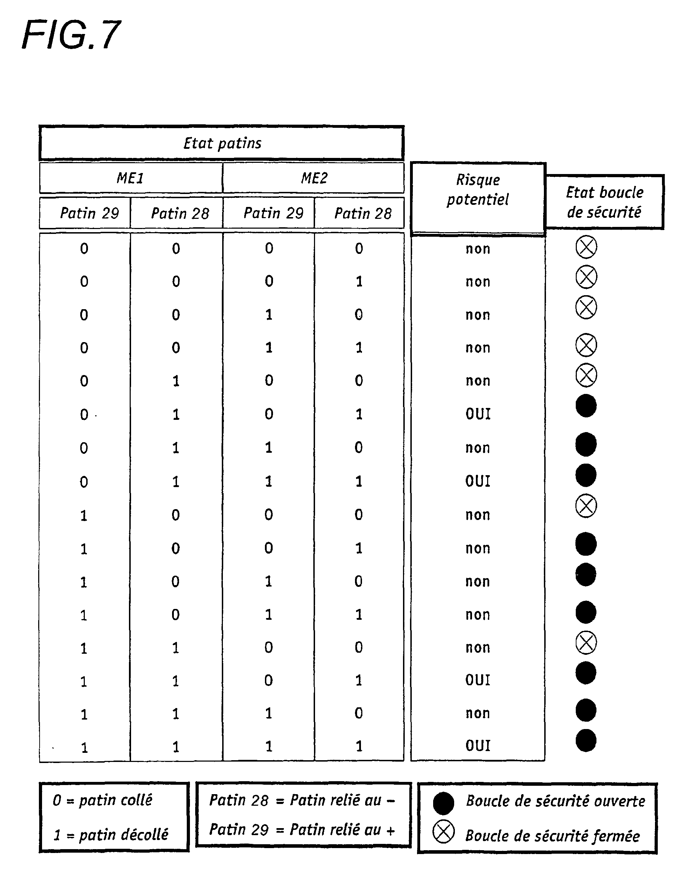

Selon une deuxième variante, représentée sur les figures 5 et 7, les deux patins 28 et 29 d'un même ensemble de guidage ou d'un même ensemble directionnel ME1 ou ME2 montés également dans un circuit électrique de basse tension de préférence continue, par exemple 24 volts entre les bornes référencées BT+ et BT- d'un même générateur électrique comme représenté sur la figure 5 formant ainsi un circuit de sécurité. La particularité de cette variante concerne le branchement des bornes BT+ et BT- du générateur basse tension. Ici la borne BT+ du générateur est reliée à la masse contrairement à la variante précédente. Egalement dans ce circuit de sécurité, se trouvent montés en série entre les bornes BT+ et BT- du générateur sous la forme d'une boucle dite de sécurité, un détecteur par exemple de courant ou de passage du courant ou un dispositif électromagnétique par exemple un relais comportant une bobine électromagnétique 33 actionnant au moins les contacts d'un interrupteur 34, un premier patin 29, le rail de guidage 2 métallique et conducteur, et un deuxième patin 28 de la même paire ME1 ou ME2 relié électriquement à la borne BT-.

Comme indiqué ci dessus, le patin 29 est relié à la masse du châssis à travers la bobine électromagnétique 33.

Un montage analogue existe pour l'ensemble directionnel à l'arrière de la rame.

Les deux montages peuvent être indépendants ou groupés en parallèle ou groupés par la simple réunion des bornes positives entre elles.

Le fonctionnement individuel de chaque circuit de détection est quasi identique à celui décrit ci-dessus.

Si les conditions de passage du courant sont réunies, le courant passe dans la boucle de détection et la bobine du relais est alimentée et au-delà d'un certain seuil de courant elle déclenchera la fermeture des contacts de l'interrupteur 34 relatifs à la bobine 33 et les maintiendra fermés aussi longtemps que la valeur du courant dépassera le seuil de déclenchement.

Si la qualité des contacts électriques se dégrade ou s'il survient un événement de limitation de passage du courant ou pour une cause quelconque le contact se coupe ou devient faible médiocre ou erratique, la bobine 33 ne sera plus ou sera insuffisamment alimentée et l'interrupteur 34 s'ouvrira.

Les deux ensembles avant ME1 et arrière ME2 fonctionnent de la même façon.

On a consigné sur le tableau de la figure 7 tous les états possibles dans un système à deux ensembles ME1 et ME2 avec les conclusions sur le risque potentiel et sur l'état de la boucle de sécurité représentant la grille d'une logique de commande qui aboutira à la suppression du risque par exemple à la coupure de l'alimentation électrique générale par l'abaissement du pantographe ou à la fermeture du disjoncteur principal ou la mise en oeuvre du frein de sécurité dans le cas d'un risque important identifié.

Le défaut de mise à la terre du rail de guidage 2 peut également être détecté car il déclenche le détecteur.

Tous les cas d'état de boucle de sécurité ouverte correspondant à un cercle noir sur la figure 7 sont repris ci-dessous dont quatre cas considérés comme potentiellement dangereux.
1. ME1 patin 29 collé et ME1 patin 28 décollé avec ME2 patin 29 collé et ME2 patin 28 décollé,
2. ME1 patin 29 collé et ME1 patin 28 décollé avec ME2 patin 29 décollé et ME2 patin 28 collé,
3. ME1 patin 29 collé et ME1 patin 28 décollé avec ME2 patin 29 décollé et ME2 patin 28 décollé,
4. ME1 patin 29 décollé et ME1 patin 28 collé avec ME2 patin 29 collé et ME2 patin 28 décollé,
5. ME1 patin 29 décollé et ME1 patin 28 collé avec ME2 patin 29 décollé et ME2 patin 28 collé,
6. ME1 patin 29 décollé et ME1 patin 28 collé avec ME2 patin 29 décollé et ME2 patin 28 décollé,
7. ME1 patin 29 décollé et ME1 patin 28 décollé avec ME2 patin 29 collé et ME2 patin 28 décollé,
8. ME1 patin 29 décollé et ME1 patin 28 décollé avec ME2 patin 29 décollé et ME2 patin 28 collé,
9. ME1 patin 29 décollé et ME1 patin 28 décollé avec ME2 patin 29 décollé et ME2 patin 28 décollé.

Ces indications permettent d'après le tableau de la figure 7, d'établir un avertissement de danger potentiel d'électrisation conduisant à des mesures immédiates de précaution pouvant aller jusqu'à la coupure de l'alimentation électrique du véhicule de transport, en particulier de la rame.

On remarque par le plus grand nombre de cas de signalisation d'un danger que cette deuxième variante est plus sécurisante que la première.

## Revendications

1. Dispositif de contrôle permanent de la mise à la terre pour la sécurité et la prévention du risque d'électrisation des personnes dans les véhicules de transport en commun (1) sur pneumatiques et autoguidés le long d'un rail métallique de guidage (2) relié à la terre à l'aide d'au moins un ensemble d'autoguidage (16) gouvernant un ensemble roulant directionnel mettant en oeuvre au moins un galet (3, 4) roulant sur le rail métallique de guidage (2) et utilisant l'énergie électrique comme énergie de traction **caractérisé en ce que** le véhicule (1) comporte au moins deux éléments de contact électrique (28, 29) distants l'un de l'autre en contact avec le rail métallique de guidage (2) et **en ce que** ces éléments de contact (28, 29) forment avec la partie du rail de guidage (2) s'étendant entre eux et un moyen de détection du passage d'un courant, une boucle de sécurité alimentée par un générateur de basse tension électrique de bornes BT+ et BT-, le moyen de détection fournissant un signal ou un état de boucle fermée ou de boucle ouverte selon que le contact électrique au niveau des éléments de contact (28, 29) est satisfaisant ou insatisfaisant provoquant dans ce dernier cas l'entrée en action de dispositifs de sécurité ou la mise en application de mesures de sécurité.

2. Dispositif selon la revendication 1 **caractérisé en ce que** l'un au moins des éléments de contact électrique (28, 29) est porté par un ensemble d'autoguidage (16).

3. Dispositif selon la revendication 1 ou 2 **caractérisé en ce que** la basse tension électrique est une basse tension continue.

4. Dispositif selon la revendication précédente **caractérisé en ce que** la basse tension continue est une tension de 24 volts.

5. Dispositif selon l'une quelconque des revendications précédentes **caractérisé en ce que** l'un des éléments de contact électrique (28) est relié électriquement au châssis (19) et à la borne négative BT- du générateur électrique et **en ce que** l'autre élément de contact (29) est relié à la borne positive BT+ du générateur à travers le détecteur, la borne négative BT- du générateur étant reliée au châssis (19).

6. Dispositif selon l'une quelconque des revendications précédentes de 1 à 4 **caractérisé en ce que** l'un des éléments de contact (28) est relié électriquement à la borne négative BT- du générateur électrique et **en ce que** l'autre élément de contact (29) est relié à la borne positive BT+ du générateur à travers le détecteur, la borne positive BT+ du générateur étant reliée au châssis (19).

7. Dispositif selon la revendication 1 ou 2 **caractérisé en ce que** chaque élément de contact est un patin de glissement ou de frottement (28, 29) se déplaçant le long du rail (2) métallique de guidage.

8. Dispositif selon la revendication 1 **caractérisé en ce que** le moyen de détection est une bobine (33) d'un électroaimant actionnant les contacts d'un interrupteur (34).

9. Dispositif selon la revendication 2 **caractérisé en ce que** les éléments de contact (28, 29) sont montés longitudinalement de part et d'autre du ou des galet(s) de guidage (3, 4).

10. Dispositif selon la revendication 1 **caractérisé en ce que** les éléments de contact (28, 29) sont montés l'un derrière l'autre sur le châssis (19) à l'avant de la rame (1).

11. Dispositif selon la revendication 1 **caractérisé en ce que** l'on prévoit une boucle de sécurité à l'avant de la rame (1) avec son générateur électrique basse tension BT+ et BT- et une autre boucle de sécurité à l'arrière de la rame (1) avec son propre générateur électrique basse tension BT+ et BT-.

12. Dispositif selon la revendication précédente **caractérisé en ce que** les bornes négatives BT- des générateurs électriques de basse tension sont reliées entre elles et au châssis (19).

13. Dispositif selon la revendication 11 **caractérisé en ce que** les bornes négatives BT- des générateurs électriques de basse tension sont reliées entre elles et **en ce que** les bornes positives BT+ sont reliées entre elles et au châssis (19).

## Claims

1. A device for permanently controlling a ground for safety purposes and for preventing the risk of electrical shock risk to passengers on self-guided public transportation vehicles (1) running on tires along a metal guide rail (2) on the ground using at least one self-guiding assembly (16) governing a moving directional assembly with at least one guide wheel (3,4) traveling along the metal guide rail (2) and whereon the vehicle utilizes electrical energy as the driving force, **characterized in that** the vehicle (1) comprises at least two electrical contact elements (28, 29) separated from one another and in contact with the metal guide rail (2) and **in that** these contact elements (28, 29), together with the portion of the guide rail (2) extending between them and a current passage detector, form a safety loop supplied by a low voltage electrical generator with terminals BT+ and BT-, said detector furnishing a signal indicating whether the safety loop is open or closed depending upon whether the electrical contact at the level of the contact elements (28, 29) is satisfactory or unsatisfactory, and in the latter case, engaging the safety elements or causing safety measures to be applied.

2. A device according to claim 1 **characterized in that** at least one of the electrical contact elements (28, 29) is supported by a self-guiding assembly (16).

3. A device according to claim 1 or 2 **characterized in that** the low electrical voltage is continuous low voltage.

4. A device according to the preceding claim **characterized in that** the continuous low voltage is 24 volts.

5. A device according to any one of the preceding claims **characterized in that** one of the electrical contact elements (28) is electrically connected to the chassis (19) and to the negative terminal BT- of the electrical generator and **in that** the other contact elements (29) is connected to the positive terminal BT+ of the generator through the detector, while the negative terminal BT- of the generator is connected to the chassis (19).

6. A device according to any one of preceding claims 1 through 4 **characterized in that** one of the contact elements (28) is electrically connected to the negative terminal BT- of the electrical generator and **in that** the other contact element (29) is connected to the positive terminal BT+ of the generator through the detector, while the positive terminal BT+ is connected to the chassis (19).

7. A device according to claim 1 or 2 **characterized in that** each contact element is a sliding or friction shoe (28, 29) that is displaced along the metal guide rail (2).

8. A device according to claim 1 **characterized in that** the detection means is a coil (33) of an electromagnet actuating the contacts of an interrupt switch (34).

9. A device according to claim 2 **characterized in that** the contact elements (28, 29) are longitudinally attached on either side of the guide wheel or wheels (3, 4).

10. A device according to claim I **characterized in that** the contact elements (28, 29) are attached one behind the other on the chassis (19) at the front of the series of vehicles (1).

11. A device according to claim 1 **characterized in that** a safety loop is provided at the front of the series of vehicles (1) with its low voltage electrical generator BT+ and BT- and another safety loop at the rear of the series (1) with its own low voltage electrical generator BT+ and BT-.

12. A device according to the preceding claim **characterized in that** the negative terminals BT-on the low voltage electrical generator are connected to each other and to the chassis (19).

13. A device according to claim 11 **characterized in that** the negative terminals BT- on the low voltage electrical generators are connected to each other and **in that** the positive terminals BT+ are connected to each other and to the chassis (19).

## Patentansprüche

1. Vorrichtung zur permanenten Kontrolle der Erdung eines öffentlichen Transportfahrzeugs (1) zur Sicherheit und zur Verhinderung der Gefahr, dass Personen eine Stromschlag erleiden, welches auf Reifen und entlang einer metallischen Führungsschiene (2)selbstgeführt ist, die mittels wenigstens einer Selbstführungseinheit (16) geerdet ist, welche eine Richtungs-Rolleinheit steuert, die von wenigstens einer Rolle (3, 4) gebildet ist, welche auf der metallischen Führungsschiene (2) rollt und wobei das Transportfahrzeug als Antriebsenergie elektrische Energie nutzt, **dadurch gekennzeichnet, dass** das Fahrzeug (1) wenigstens zwei voneinander beabstandete elektrische Kontaktelemente (28, 29) aufweist, welche mit der metallischen Führungsschiene (2) in Kontakt stehen, und dass die Kontaktelemente (28, 29) mit dem sich zwischen ihnen erstreckenden Abschnitt der Führungsschiene (2) sowie mit einem Detektionsmittel zum Erfassen eines Stromdurchgangs eine Sicherheitsschleife bilden, die von einem elektrischen Niederspannungsgenerator mit Anschlüssen BT+ und BT- versorgt ist, wobei das Detektionsmittel ein Signal oder einen Zustand einer geschlossenen Schleife oder einer geöffneten Schleife liefert, je nachdem, ob der elektrische Kontakt auf dem Niveau der Kontaktelemente (28, 29) zufriedenstellend oder nicht zufriedenstellend ist, was im letztgenannten Fall ein Eingreifen von Sicherheitseinrichtungen oder ein Ergreifen von Sicherheitsmaßnahmen bewirkt.

2. Vorrichtung nach Anspruch 1, **dadurch gekennzeichnet, dass** wenigstens eines der elektrischen Kontaktelemente (28, 29) von einer Selbstführungseinheit (16) getragen ist.

3. Vorrichtung nach Anspruch 1 oder 2, **dadurch gekennzeichnet, dass** die elektrische Niederspannung eine Niedergleichspannung ist.

4. Vorrichtung nach dem vorangehenden Anspruch, **dadurch gekennzeichnet, dass** die Niedergleichspannung eine Spannung von 24 Volt ist.

5. Vorrichtung nach einem der vorangehenden Ansprüche, **dadurch gekennzeichnet, dass** eines der elektrischen Kontaktelemente (28) mit dem Chassis (19) und mit dem negativen Anschluss BT- des elektrischen Generators elektrisch verbunden ist, und dass das andere Kontaktelement (29) über den Detektor mit dem positiven Anschluss BT+ des Generators verbunden ist, wobei der negative Anschluss BT- des Generators mit dem Chassis (19) verbunden ist.

6. Vorrichtung nach einem der vorangehenden Ansprüche 1 bis 4, **dadurch gekennzeichnet, dass** eines der elektrischen Kontaktelemente (28) mit dem negativen Anschluss BT- des elektrischen Generators elektrisch verbunden ist, und dass das andere Kontaktelement (29) über den Detektor mit dem positiven Anschluss BT+ des Generators verbunden ist, wobei der positive Anschluss BT+ des Generators mit dem Chassis (19) verbunden ist.

7. Vorrichtung nach Anspruch 1 oder 2, **dadurch gekennzeichnet, dass** jedes Kontaktelement von einem Gleit- oder Reibschuh (28; 29) gebildet ist, welcher entlang der metallischen Führungsschiene (2) verlagerbar ist.

8. Vorrichtung nach Anspruch 1, **dadurch gekennzeichnet, dass** das Detektionsmittel von einer Spule (33) eines Elektromagnets gebildet ist, welcher die Kontakte eines Schalters (34) antreibt.

9. Vorrichtung nach Anspruch 2, **dadurch gekennzeichnet, dass** die Kontaktelemente (28, 29) in Längsrichtung auf beiden Seiten der Führungsrolle(n) (3, 4) angeordnet sind.

10. Vorrichtung nach Anspruch 1, **dadurch gekennzeichnet, dass** die Kontaktelemente (28, 29) an dem Chassis (29) hintereinander, vorne an dem Zug (1) angeordnet sind.

11. Vorrichtung nach Anspruch 1, **dadurch gekennzeichnet, dass** eine Sicherheitsschleife vorne an dem Zug (1) mit ihrem elektrischen Niederspannungsgenerator BT+ und BT- und eine weitere Sicherheitsschleife hinten an dem Zug (1) mit ihrem eigenen elektrischen Niederspannungsgenerator BT+ und BT- vorgesehen ist.

12. Vorrichtung nach dem vorangehenden Anspruch, **dadurch gekennzeichnet, dass** die negativen Anschlüsse BT der elektrischen Niederspannungsgeneratoren miteinander sowie mit dem Chassis (19) verbunden sind.

13. Vorrichtung nach Anspruch 11, **dadurch gekennzeichnet, dass** die negativen Anschlüsse BT der elektrischen Niederspannungsgeneratoren miteinander verbunden sind, und dass die positiven Anschlüsse BT+ miteinander sowie mit dem Chassis (19) verbunden sind.
